# FASCICULE DE BREVET EUROPEEN

(11) **EP 2 994 351 B1**
(45) Date de publication et mention de la délivrance du brevet: **11.10.2017**
(21) Numéro de dépôt: 14721457.1
(22) Date de dépôt: 03.04.2014
(51) Int. Cl.: B60R 16/02

(54) **GOULOTTE POUR UN SYSTÈME DE MOTORISATION DE VÉHICULE**
KABELKANAL FÜR EIN FAHRZEUGANTRIEBSSYSTEM
CHANNEL FOR A VEHICLE DRIVE DEVICE SYSTEM

(30) Priorité: 06.05.2013 FR 1354123
(43) Date de publication de la demande: 16.03.2016
(73) Titulaire: Renault S.A.S., 92100 Boulogne-Billancourt (FR)
(72) Inventeur: SAUBION, Mathieu, F-78310 Maurepas (FR); DE LUCA, Julio César, F-27200 Vernon (FR); CROGUENNEC, Gurvan, F-78390 Bois D'arcy (FR)
(86) Numéro de dépôt international: PCT/FR2014/050799
(87) Numéro de publication internationale: WO 2014/181049

(56) Documents cités:
- EP-A1- 1 502 821
- WO-A1-2012/076330
- US-A1- 2005 217 888

## Description

### Domaine technique

La présente invention se rapporte à un système de motorisation, et plus particulièrement à une goulotte du système de motorisation prévue pour supporter et protéger contre des hautes températures des éléments allongés tels que des câbles électriques ou d'autres éléments sensibles dans le compartiment moteur tels que des canalisations de carburant, de climatisation ou des connecteurs, potentiellement exposés à des flux à hautes températures provenant de composants très chauds du moteur.

### Etat de la technique

Les éléments allongés tels que les câbles ou les conduites ont besoin d'être supportés lorsqu'ils sont utilisés sur des installations. Dans le cas des systèmes de motorisation d'un véhicule, certains câbles tels que des câbles électriques ou des conduits d'alimentation en carburant ont besoin d'être fixés sur le moteur thermique. Pour cela on peut utiliser des goulottes.

Le document WO 2012/076330 montre un exemple de goulotte comportant une paroi ayant une section en U s'étendant longitudinalement. Des pattes sont prévues pour sa fixation sur le moteur. Un capot permet de fermer de manière amovible la section en U. La goulotte est réalisée en matière synthétique.

Dans certaines configurations, des organes susceptibles de monter en température sont placés à proximité du moteur. C'est par exemple le cas d'un pot catalytique dont l'écran thermique est susceptible de monter à 350°C, soit une température bien supérieure à celle observée près du moteur. Si une goulotte est placée à proximité, les câbles ou des nervures électriques liés aux câbles risquent d'être exposés à des températures excessives entraînant leur détérioration.

L'invention a donc pour objectif de proposer des mesures constructives afin de limiter l'exposition à la température des éléments allongés d'un système de motorisation.

### Description de l'invention

Avec ces objectifs en vue, l'invention a pour objet une goulotte pour contenir des éléments de forme allongée et destinée à être fixée sur un moteur thermique de véhicule, la goulotte comportant une paroi principale s'étendant longitudinalement selon une section en forme de U, caractérisée en ce qu'elle comporte en outre un écran s'étendant parallèlement à au moins une partie de la paroi principale de manière à définir entre eux une lame d'air, l'écran étant d'un seul tenant avec la goulotte.

La constitution d'un écran avec une lame d'air entre l'écran et la paroi permet d'obtenir une protection thermique de la paroi et donc des éléments qu'elle supporte. En réalisant l'écran d'un seul tenant avec la paroi, on simplifie la fabrication et l'installation de la goulotte et de son écran, puisqu'il n'est pas besoin de prévoir d'opérations de fabrication ou d'installation distinctes de celles pour la goulotte.

Selon une caractéristique particulière, des nervures relient l'écran à la paroi principale à travers la lame d'air. Les nervures sont des parties de matière également d'un seul tenant avec la paroi et l'écran. On obtient un maintien efficace de l'écran tout en maintenant une lame d'air pour assurer un refroidissement de la paroi.

Selon l'invention, la lame d'air est débouchante par au moins une ouverture s'étendant dans la direction longitudinale tout le long de l'écran. On donne ainsi la possibilité d'une ventilation de la lame d'air afin de permettre un refroidissement par convection, et ce, tout le long de la partie protégée par l'écran. Lorsqu'au moins deux ouvertures sont prévues, une circulation d'air entre les deux ouvertures peut s'établir, renforçant le refroidissement.

De manière particulière, la goulotte est par exemple en matière thermoplastique chargé de fibre de verre. La matière thermoplastique peut être choisie parmi le polyamide et le polyphtalamide. On a déjà pu montrer qu'une telle matière résistait à des températures élevées, jusqu'à 250°C, en conservant suffisamment de propriétés mécaniques. Une matière synthétique thermodurcissable est également adaptée.

Selon une disposition constructive, la goulotte comporte au moins une patte de fixation comportant au moins un insert métallique. L'insert métallique permet un renforcement mécanique localisé, en particulier au niveau des pattes de fixation qui sont des endroits particulièrement sollicités.

L'invention a aussi pour objet un système de motorisation comportant un moteur thermique, une goulotte fixée sur le moteur thermique et comportant une paroi principale s'étendant longitudinalement selon une section en forme de U, la goulotte supportant des éléments allongés, le système étant caractérisé en ce qu'il comporte au moins un organe susceptible de monter en température, et en ce que la goulotte comporte en outre un écran s'étendant parallèlement à au moins une partie de la paroi principale de manière à définir entre eux une lame d'air débouchante par au moins une ouverture s'étendant dans la direction longitudinale tout le long de l'écran, l'écran étant d'un seul tenant avec la goulotte et interposé entre la paroi principale et l'organe.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue en coupe d'un système de motorisation conforme à un mode de réalisation de l'invention et comportant une goulotte ;

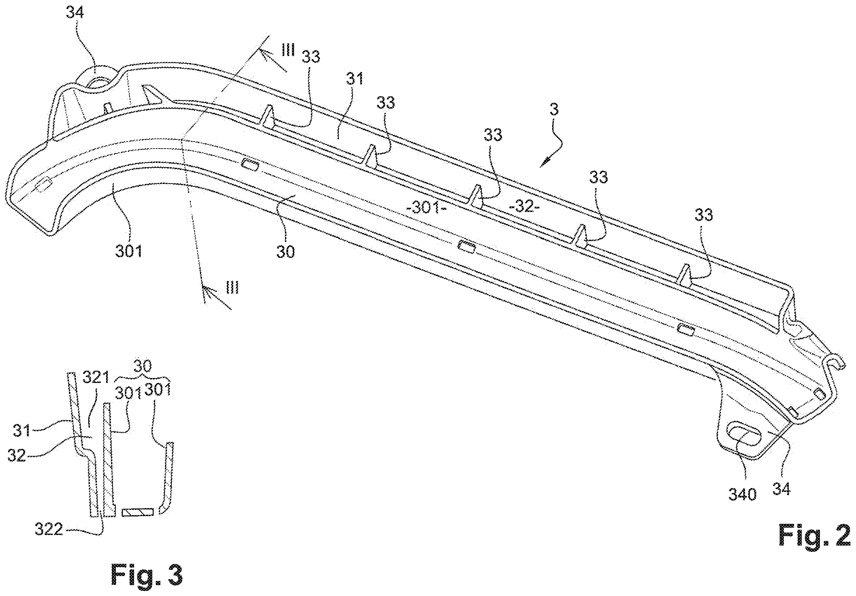

- la figure 2 est une vue en perspective de la goulotte de la figure 1 ;
- la figure 3 est une section de la goulotte selon le plan III-III de la figure 2.

### DESCRIPTION DETAILLEE

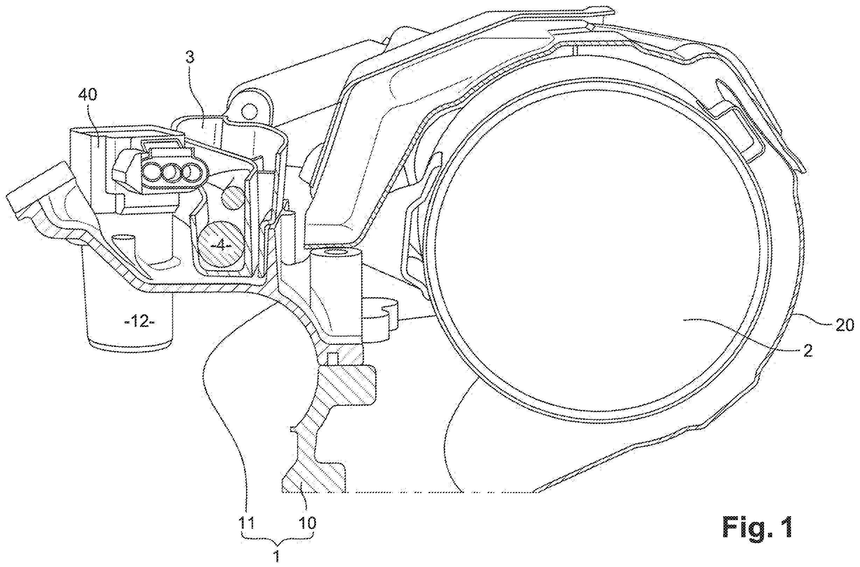

Un système de motorisation conforme à un mode de réalisation de l'invention, tel que montré sur la figure 1, comporte un moteur thermique 1, dont on voit seulement une culasse 10 et un couvercle de culasse 11. Le système comporte en outre un organe 2 susceptible de monter en température, en l'occurrence un dispositif de traitement des gaz d'échappement et plus précisément un catalyseur d'oxydation. Le catalyseur d'oxydation 2 est disposé à proximité de la culasse 10, en fonction de contraintes d'intégration. Un écran 20 est fixé sur le catalyseur d'oxydation 2 afin de permettre déjà un premier abaissement de température.

Conformément à l'invention, une goulotte 3 est fixée sur le moteur thermique 1, plus précisément sur le couvercle de culasse 11 par l'intermédiaire de deux pattes de fixation 34. La goulotte 3 comporte une paroi principale 30 s'étendant longitudinalement selon une section en forme de U. Des éléments 4 de forme allongée formant par exemple un faisceau de câbles sont placés dans la goulotte 3, entre les ailes 301 de la section en U. Certains câbles 4 sortent du faisceau et se terminent par des connecteurs électriques 40 branchés sur des bobines 12 et également protégés par la goulotte 3. La goulotte 3 est placée sensiblement parallèlement à l'organe 2, entre ce dernier et le couvercle de culasse 11.

La goulotte 3 comporte en outre un écran 31 s'étendant parallèlement à l'une des ailes 301 de la paroi principale 30 de manière à définir entre eux une lame d'air 32. L'écran 31 est en regard de l'organe 2 et est d'un seul tenant avec la goulotte 3.

L'écran 31 est relié à la paroi principale 30 par l'intermédiaire de nervures 33 qui s'étendent à travers la lame d'air 32. Les nervures 33 sont réparties le long de la direction longitudinale et s'étendent dans une direction sensiblement perpendiculaire à la direction longitudinale. La lame d'air 32 est ainsi débouchante par une ouverture supérieure 321 et une ouverture inférieure 322 s'étendant dans la direction longitudinale tout le long de l'écran 31. Ainsi de l'air peut circuler en passant d'une ouverture à l'autre, par exemple de l'ouverture inférieure 322 à l'ouverture supérieure 321.

La goulotte 3 est en matière thermoplastique chargé de fibre de verre, par exemple à 30% de fibre de verre **en masse.** La matière thermoplastique est par exemple du polyamide ou du polyphtalamide.

Les pattes de fixation 34 comportent au moins un insert métallique 340 de forme annulaire et s'étendant sur toute la hauteur d'un trou de fixation qu'il délimite. Ainsi, une vis de fixation prend appui sur l'insert métallique 340 et ne peut pas écraser la matière synthétique.

L'invention n'est pas limitée au mode de réalisation qui a été décrit à titre d'exemple. Le nombre de pattes pourrait être différent. La goulotte pourrait être munie d'un capot amovible.

## Revendications

1. Goulotte pour contenir des éléments (4) de forme allongée et destinée à être fixée sur un moteur thermique (1) de véhicule, la goulotte (3) comporte une paroi principale (30) s'étendant longitudinalement selon une section en forme de U, **caractérisée en ce qu'**elle comporte en outre un écran (31) d'un seul tenant avec la goulotte (3) et s'étendant parallèlement à au moins une partie de la paroi principale (30) de manière à définir entre eux une lame d'air (32), débouchante par au moins une ouverture (321, 322) s'étendant dans la direction longitudinale tout le long de l'écran (31).

2. Goulotte selon la revendication 1, dans laquelle des nervures (33) relient l'écran (31) à la paroi principale (30) à travers la lame d'air (32).

3. Goulotte selon la revendication 1 ou 2, dans laquelle les nervures (33) s'étendent dans une direction sensiblement perpendiculaire à la direction longitudinale.

4. Goulotte selon l'une des revendications 1 à 3, **caractérisée en ce qu'**elle est en matière thermoplastique chargé de fibre de verre.

5. Goulotte selon la revendication 4, dans laquelle la matière thermoplastique est choisie parmi le polyamide et le polyphtalamide.

6. Goulotte selon l'une des revendications 1 à 5, **caractérisée en ce qu'**elle comporte au moins une patte de fixation comportant au moins un insert métallique.

7. Système de motorisation comportant un moteur thermique (1), une goulotte (3) fixée sur le moteur thermique (1) et comportant une paroi principale (30) s'étendant longitudinalement selon une section en forme de U, la goulotte (3) supportant des éléments (4) allongés, le système étant **caractérisé en ce qu'**il comporte au moins un organe (2) susceptible de monter en température, et **en ce que** la goulotte (3) comporte en outre un écran (31) s'étendant parallèlement à au moins une partie de la paroi principale (30) de manière à définir entre eux une lame d'air (32), débouchante par au moins une ouverture (321, 322) s'étendant dans la direction longitudinale tout le long de l'écran, l'écran (31) étant d'un seul tenant avec la goulotte (3) et interposé entre la paroi principale (30) et l'organe (2).

## Patentansprüche

1. Kabelkanal, um Elemente (4) von länglicher Form zu enthalten und der dazu bestimmt ist, an einem Verbrennungsmotor (1) eines Kraftfahrzeugs befestigt zu werden, wobei der Kabelkanal (3) eine Hauptwand (30) aufweist, die sich in Längsrichtung nach einem U-förmigen Querschnitt erstreckt, **dadurch gekennzeichnet, dass** er ferner einen Schirm (31) aufweist, der aus einem Stück mit dem Kabelkanal (3) ist und sich parallel zu mindestens einem Teil der Hauptwand (30) derart erstreckt, um zwischen sich einen Luftspalt (32) zu bilden, der durch mindestens eine Öffnung (321, 322) mündet, die sich in die Längsrichtung entlang des Schirms (31) erstreckt.

2. Kabelkanal nach Anspruch 1, wobei Rippen (33) den Schirm (31) mit der Hauptwand (30) quer durch den Luftspalt (32) verbinden.

3. Kabelkanal nach Anspruch 1 oder 2, wobei sich die Rippen (33) in einer Richtung im Wesentlichen senkrecht zu der Längsrichtung erstrecken.

4. Kabelkanal nach einem der Ansprüche 1 bis 3, **dadurch gekennzeichnet, dass** er aus glasfaserverstärktem thermoplastischen Material besteht.

5. Kabelkanal nach Anspruch 4, wobei das thermoplastische Material ausgewählt ist aus Polyamid und Polyphtalamid.

6. Kabelkanal nach einem der Ansprüche 1 bis 5, **dadurch gekennzeichnet, dass** er mindestens eine Befestigungslasche aufweist, die mindestens einen metallischen Einsatz aufweist.

7. Motorisierungssystem, umfassend einen Verbrennungsmotor (1), einen Kabelkanal (3), der an dem Verbrennungsmotor (1) befestigt ist und eine Hauptwand (30) aufweist, die sich in Längsrichtung nach einem U-förmigen Querschnitt erstreckt, wobei der Kabelkanal (3) längliche Elemente (4) trägt, wobei das System **dadurch gekennzeichnet ist, dass** es mindestens ein Organ (2) aufweist, dessen Temperatur ansteigen kann, und dadurch, dass der Kabelkanal (3) ferner einen Schirm (31) aufweist, der sich parallel zu mindestens einem Teil der Hauptwand (30) derart erstreckt, um zwischen sich einen Luftspalt (32) zu bilden, der durch mindestens eine Öffnung (321, 322) mündet, die sich in die Längsrichtung ganz entlang des Schirms erstreckt, wobei der Schirm (31) aus einem Stück mit dem Kabelkanal (3) ist und zwischen der Hauptwand (30) und dem Organ (2) angeordnet ist.

## Claims

1. Channel for containing elements (4) of elongate shape and intended to be fixed to a vehicle combustion engine (1), the channel (3) comprising a main wall (30) extending longitudinally with a U-shaped cross section, **characterized in that** it additionally comprises a screen (31) formed in one piece with the channel (3) and extending parallel to at least one portion of the main wall (30) so as to define between them an air gap (32) which opens out through at least one opening (321, 322) extending in the longitudinal direction right along the screen (31).

2. Channel according to Claim 1, in which ribs (33) connect the screen (31) to the main wall (30) across the air gap (32).

3. Channel according to Claim 1 or 2, in which the ribs (33) extend in a substantially perpendicular direction to the longitudinal direction.

4. Channel according to one of Claims 1 to 3, **characterized in that** it is made of glass-fibre-filled thermoplastic.

5. Channel according to Claim 4, in which the thermoplastic is chosen from polyamide and polyphthalamide.

6. Channel according to one of Claims 1 to 5, **characterized in that** it comprises at least one fixing lug comprising at least one metallic insert.

7. Drive system comprising a combustion engine (1), a channel (3) fixed to the combustion engine (1) and comprising a main wall (30) extending longitudinally with a U-shaped cross section, the channel (3) supporting elongate elements (4), the system being **characterized in that** it comprises at least one member (2) capable of rising in temperature, and **in that** the channel (3) additionally comprises a screen (31) extending parallel to at least one portion of the main wall (30) so as to define between them an air gap (32) which opens out through at least one opening (321, 322) extending in the longitudinal direction right along the screen, the screen (31) being formed in one piece with the channel (3) and interposed between the main wall (30) and the member (2).
